(19)

**Europäisches Patentamt**

**European Patent Office**

**Office européen des brevets**

(11) **EP 4 485 290 A1**

(12) **EUROPEAN PATENT APPLICATION**

(43) Date of publication:
   **01.01.2025 Bulletin 2025/01**

(21) Application number: **23181719.8**

(22) Date of filing: **27.06.2023**

(51) International Patent Classification (IPC):
   **G06N 10/20** *(2022.01)*   **G06N 10/60** *(2022.01)*
   **G06N 5/01** *(2023.01)*   **G06Q 10/04** *(2023.01)*
   **G06Q 40/06** *(2012.01)*   **G06Q 50/06** *(2024.01)*

(52) Cooperative Patent Classification (CPC):
   **G06N 10/60; G06N 5/01; G06N 10/20; G06Q 10/04;**
   **G06Q 50/06; G06Q 50/40; G06Q 90/00**

(84) Designated Contracting States:
   **AL AT BE BG CH CY CZ DE DK EE ES FI FR GB**
   **GR HR HU IE IS IT LI LT LU LV MC ME MK MT NL**
   **NO PL PT RO RS SE SI SK SM TR**
   Designated Extension States:
   **BA**
   Designated Validation States:
   **KH MA MD TN**

(71) Applicant: **Honda Research Institute Europe GmbH**
   **63073 Offenbach/Main (DE)**

(72) Inventors:
   • **Schmitt, Sebastian**
     **63073 Offenbach am Main (DE)**
   • **Ekstrøm, Linus**
     **63073 Offenbach am Main (DE)**

(74) Representative: **Beder, Jens et al**
   **Mitscherlich PartmbB**
   **Patent- und Rechtsanwälte**
   **Karlstraße 7**
   **80333 München (DE)**

(54) **METHOD AND SYSTEM FOR SOLVING PROBLEMS WITH MULTIPLE CONFLICTING OBJECTIVES**

(57)   A computer implemented method for obtaining a set of Pareto-optimal solutions to a given multi-objective optimization problem with different objectives . The method generates a set of parameters on a classical computation component using the classical optimization algorithm. Based on the set of parameters, a quantum component generates a quantum state by executing a parameterized quantum circuit. A set of basis states is selected from the one quantum state The classical computation component calculates a set of objective values consisting of the objective values for each solution in the set of classical solutions, and a new estimate for the Pareto set of solutions and the corresponding Pareto front by the classical optimizer is generated. The internal state of the classical optimization algorithm is updated based on the current set of solutions and the Pareto set and their corresponding sets of objective values.

Fig. 1

EP 4 485 290 A1

**Description**

The invention relates to a computer implemented method for obtaining a set of Pareto-optimal solutions to a given multi-objective optimization problem and a hybrid quantum-classical computer system implementing such method.

Quantum optimization is a very active field of research. The current generation of quantum computing hardware devices is still limited in sizes and subject to noise. The usefulness of these so-called noisy intermedia scale quantum (NISQ) devices for application problems is currently being tested and evaluated on many real-world application problems.

The current state of the art approaches for solving optimization problems with quantum computers are hybrid quantum-classical algorithms as described for example in "Noisy intermediate-scale quantum (NISQ) algorithms, Rev. Mod. Phys. 94, 015004". Examples are variational quantum eigensolver (VQE) described in "The variational quantum eigensolver: a review of methods and best practices. Physics Reports, 986, 1-128", quantum approximate optimization algorithm (QAOA) described in "A Quantum Approximate Optimization Algorithm, arXiv: 1411.4028 (2014)" or "From the quantum approximate optimization algorithm to a quantum alternating operator ansatz, Algorithms 12 (2019)" or the like as in "Quantum machine learning beyond kernel methods", arXiv preprint arXiv:2110.13162 (2021)". All these approaches consider problems where the goal is to find the optimal solution(s) which minimize a predefined cost function. Technically, they target to solve single objective optimization tasks. What is still missing is an equivalent quantum approach which targets the solutions of a multi-objective optimization problem.

There are a few approaches which actually utilize quantum hardware and consider multi-objective problems. In "Multiobjective variational quantum optimization for constrained problems: an application to Cash Management, arXiV:2302.04196, https://doi.org/10.48550/arXiv.2302.04196", a VQE quantum circuit and a coupled classical NSGAII algorithm is applied to it. From the quantum state prepared by the quantum apparatus, they calculate classically two objective functions: the cost function, which implements the actual goal when minimized and the probability to find feasible solutions in the final state. The target is not to map a full Pareto front, but arrive at one optimal solutions point, where the probability to find feasible solutions is very close to one and the cost function is minimized. In effect, this method is a constraint handling method, where a classical multi-objective optimization is used to efficiently explore the search space of feasible and infeasible solutions. No quantum aspects of the quantum computation is utilized to arrive at the solution of a multi-objective problem.

Despite the problems being attacked becoming more realistic in nature, one central feature of real-world problems is still not much considered: realistic problems often deal with multiple conflicting objectives such cost (which should be as low as possible), quality (which should be as high as possible), user satisfaction (which should be as large as possible), $CO_2$ footprint (which should be as low as possible), .... These objectives are usually in a tradeoff relation where solutions which have very good values in one objective, e.g., high quality, are not very good in another objective, i.e., also have high cost. Therefore, the target of multi-objective optimization is to find a whole set of solutions (not only one) which give a good approximation to the so-called Pareto Front (PF), which is the best achievable set of trade-off set of solutions. Each solution in the PF is equal or better in at least one objective and at the same time worse in at least one other objective than any other solution in the PF.

"Multi-Objective Routing Optimization for 6G Communication Networks Using a Quantum Approximate Optimization Algorithm", Sensors 22(19), 7570 (2022) doi:10.3390/S22197570 describes solving a multi-objective problem by iteratively solving many constrained single-objective problems. The quantum computer is only used to solve single-objective problems. Each single-objective problem optimizes only one objective while imposing constraints on the other objectives. It does not utilize the quantum computer to get a population of solutions directly.

Several papers exist which utilize so-called nondominated quantum optimization (NDQO) and modifications thereof like multi-objective decomposition quantum optimization (MODQO) or non-dominated quantum iterative optimization (NDQIO) described in "Quantum-Assisted Routing Optimization for Self-Organizing Networks", IEEE Access 2, 614-632 (2014) doi: 10.1109/ACCESS.2014.2327596, "Non-Dominated Quantum Iterative Routing Optimization for Wireless Multihop Networks", IEEE Access 3, 1704-1728 (2015) doi: 10.1109/ACCESS.2015.2478793 or "Quantum-Assisted Joint Multi-Objective Routing and Load Balancing for Socially-Aware Networks", IEEE Access 4, 9993-10028 (2016) doi: 10.1109/ACCESS.2016.2629671. All these approaches target to find the Pareto optimal solution set to a multi-objective problem. They do so by utilizing a quantum computing apparatus. They specifically design a quantum circuit that evaluates Pareto dominance relations between individual solutions with the help of auxiliary qubits. Then they use variants / extensions of Grover search to search for novel good candidate solutions which they then can possible insert into the current approximation of the Pareto front. These algorithms are specifically tailored to solve one single problem and use complex circuits to evaluate Pareto-dominance relations between sets of solutions. They cannot be applied to general multi-objective optimization problems directly, and in particular they cannot be executed on NISQ devices but require fully fault tolerant and error corrected quantum hardware not available in the near- to mid-term future.

However, there is still a need to directly address optimization of multiple conflicting objectives to enable an efficient calculation of a plurality of optimized solutions of the problem. The current state of art does not allow for handling multi-objective optimization problems natively on quantum hardware devices.

The current invention addresses the above mentioned problem to find solutions of realistic real world problems, specifically known from the energy management domain, on current and future quantum hardware devices employing a quantum-native multi-objective quantum optimization approach according to the method and computer system defined in the independent claims.

The dependent claims define advantageous aspects and features.

The invention encompasses the utilization of the quantum superposition, which is inherent to quantum states, as a resource to encode a complete population of solutions of a multi-objective optimization algorithm. The quantum circuit is designed in such a way as to increase the diversity in the population and also improve all objectives such that they give a good approximation to the Pareto front.

The method and apparatus for obtaining a preferably complete set of $N_{PF} \in \mathbb{N}^+$ Pareto-optimal solutions, $\mathbb{PS} = \{x_i\}_{i=1}^{N_{PF}}$, to a given multi-objective optimization problem with M different objectives $\vec{C}(x) = \{C_\alpha\}_{\alpha=1}^{M} = (C_1(x), C_2(x), \dots, C_M(x))^T$ where x represents a classical solution of the multi-objective optimization problem, which is comprised of the following components and method steps:

a hybrid quantum-classical computer apparatus, with a quantum computing component and a classical component. The quantum computing component and the classical computing component maybe realized as two separate entities, which are capable of exchanging information. Alternatively, they may be integrated into one device. The quantum computing component realizes a parametrized quantum circuit (PQC) by implementing a unitary quantum operation $U(\gamma)$ which is parametrized by freely choosable parameters $\gamma$ and which generates a N-qubit or qudit quantum state $|\psi_\gamma\rangle$ by applying the unitary operator to a previously defined N-qubit or qudit initial state $|\psi_0\rangle$, i.e. $|\psi_\gamma\rangle = U(\gamma)|\psi_0\rangle$, which can be decomposed into the measurement basis of the quantum device, $|\psi_\gamma\rangle = \sum_{c=1}^{d_H} \xi_{\gamma,c} |x_c\rangle$ with $d_H$ the dimensionality of the Hilbert space, and each measurement basis state $|x_c\rangle$ encodes one classical solution $x_c$. The classical computing component is able to run a classical optimization algorithm by providing parameters values $\gamma$ to the quantum computing component, initializing the execution of the PQC and the preparation of the state $|\psi_\gamma\rangle$, and then receiving a set of classical solutions from the quantum component as a result and calculating the cost functions for each solution. In essence, both component together are used to solve a multi-objective optimization problem by iteration.

At each iteration t the following steps are performed:

a. generating a set of parameters $\gamma_t$ on the classical computing component using the classical optimization algorithm and sending them to the quantum component,

b. on the quantum computing component, generating a quantum state $|\psi_{\gamma_t}\rangle = U(\gamma_t)|\psi_0\rangle$ by executing the PQC with the set of parameters $\gamma_t$, where the one quantum state $|\psi_{\gamma_t}\rangle$ represents a (whole) set of different $N_s$ solutions to the original problem, since it is naturally represented as a quantum mechanical superposition of many measurements basis states, i.e. $|\psi_{\gamma_t}\rangle = \sum_{c=1}^{d_H} \xi_{\gamma_t,c} |x_c\rangle$ and each measurement basis state $|x\rangle$ corresponds to one classical solution x of the original optimization problem,

c. using a basis-state selection method to select a set of $N_S \geq N_{PF}$ basis states $\{|x_i\rangle\}_{i=1}^{N_S}$ from the one quantum state $|\psi_{\gamma_t}\rangle$ and sending the information of which basis states where selected, i.e., the set of classical solutions $\mathbb{S}_t = \{x_i\}_{i=1}^{N_S}$, to the classical computing component,

d. on the classical computing component calculating a set of objective values consisting of the objective values for each solution in the set of classical solutions, i.e. $\mathbb{O}_t = \{\vec{C}(x_i)\}_{i=1}^{N_S} \equiv \vec{C}(\mathbb{S}_t)$,

e. generating a new estimate for the Pareto set of solutions, $\mathbb{PS}_t = \{x_i\}_{i=1}^{N_{PF}}$, and the corresponding Pareto front, $\mathbb{PF}_t = \{\vec{C}(x_i)\}_{i=1}^{N_{PF}}$, by the classical optimizer incorporating the set of solutions $\mathbb{S}_t$ and the corresponding set of objectives values $\mathbb{O}_t$. According to a preferred embodiment, all those values from previous iterations, $\{\mathbb{S}_{t'}\}_{t'=1}^{t-1}$ and $\{\mathbb{PF}_{t'}\}_{t'=1}^{t-1}$ which are retrieved from an archive $\mathcal{A}$ are additionally used.

f. Based on the current set of solutions and the Pareto set and their corresponding sets of objective values, updating the internal state of the classical optimization algorithm and, in case that values from previous iterations shall be used in the generation of a new estimate, updating the archive $\mathcal{A} \rightarrow \mathcal{A} + \{t, \gamma^t, \mathbb{PS}_t, \mathbb{PF}_t\}$

g. checking a convergence criterion as a stopping criterion, and if the stopping criterion is not satisfied, repeating the process from step a. onwards, until the stopping criterion is fulfilled.

The final results after the iterations have been completed is a good set of Pareto optimal solutions $\mathbb{PS}_{Final} = \{x_i\}_{i=1}^{N_{PF}}$ where the corresponding set of objective value vectors $\mathbb{PF}_{Final} = \{\vec{C}(x_i)\}_{i=1}^{N_{PF}}$ is an efficient and good approximation to the true Pareto front.

The invention uses quantum superpositions to encode a whole population of solutions into one quantum state. The quantum computing component is designed such that the quantum circuit layout achieves multi-objective evolution of Pareto-optimal solutions as a whole with a true quantum encoding.

According to a preferred embodiment, the quantum component realizes a parametrized quantum circuit (PQC) by implementing a unitary quantum operation $U(\gamma)$ which is composed of $N_L$ layers with different choosable sets of parameters as

$$U(\gamma) = \prod_{l=1}^{N_L} U_l(\gamma_l)$$

and where each layer $l$ comprises multiple mixing and phase operators with separately choosable parameter sets $\gamma_l = \{\gamma_{X;l}, \gamma_{P;l}\}$, and the unitary in each layer has the form

$$U_l(\gamma_l) = \prod_{\alpha=1}^{M} e^{-i X_\alpha(\gamma_{X;l,\alpha})} e^{-i \gamma_{H;l,\alpha} \mathcal{H}_\alpha}$$

where the phase unitaries in each layer $\sim e^{-i \gamma_{H;l,\alpha} \mathcal{H}_\alpha}$ have freely choosable parameters $\gamma_{H;l,\alpha} \in \mathbb{R}$ and are generated by the $M$ cost Hamiltonians $\mathcal{H}_\alpha$ with $\alpha = 1, \ldots, M$, where each cost Hamiltonian $\mathcal{H}_\alpha$ represents one classical objective function $C_\alpha$, in the sense that the measurement basis states $|x\rangle$ are simultaneous eigenstates of all problem Hamiltonians and the eigenvalues of the problem Hamiltonians are given by the value of the corresponding classical objective function of the corresponding classical solutions, x, i.e.

$$\mathcal{H}_\alpha |x\rangle = C_\alpha(x) |x\rangle$$

and where the mixing unitaries in each layer, $\sim e^{-i X_\alpha(\gamma_{X;l,\alpha})}$, have freely choosable parameters $\gamma_{X;l,\alpha}$ and are generated by $M$ parametrized mixing operators $X_\alpha(\gamma_{X;l,\alpha})$ with $\alpha = 1, \ldots, M$, where the mixing operators do not commute with the cost Hamiltonians, i.e., $[X_\beta(\gamma_{X;l,\beta}), H_\alpha] \neq 0, \forall \alpha, \beta$, and therefore the mixing operators generate transitions between the measurement basis states, $X_\beta(\gamma_{X;l,\beta})|x_i \rangle \sim \sum_j \zeta_{\beta,ij}|x_j\rangle$ with $\zeta_{\beta,ij} \in \mathbb{C}$.

According to another preferred embodiment, the quantum component realizes parametrized quantum circuit (PQC) by implementing a unitary quantum operation $U(\gamma)$ which is composed of $N_L$ layers with different choosable sets of parameters as

$$U(\gamma) = \prod_{l=1}^{N_L} U_l(\gamma_l)$$

and where each layer $l$ comprises multiple mixing and phase operators with separately choosable parameter sets $\gamma_l \subset [\gamma_{X;l}, \gamma_{P;l}]$, and which has the form

$$U_l(\gamma_l) = \prod_{k=1}^{N_p} e^{-i\,X_k(\gamma_{X;l,k})}\; e^{-i\,\gamma_{P;l,k}\,P_k}$$

where the phase unitaries in each layer $\sim e^{-i\gamma_{P;l,k}\,P_k}$ have freely choosable parameters $\gamma_{P;l,k} \in \mathbb{R}$ and are generated by specific sums over the cost Hamiltonians $\mathcal{H}_\alpha$

$$P_k = \sum_{\alpha=1}^{M} a_{k,\alpha}\,\mathcal{H}_\alpha$$

The coefficients in these sums $a_{k,\alpha} \in \mathbb{R}$ may specify reference vectors $\vec{a}_k$ which have to fulfill $\sum_\alpha a_{k,\alpha}^2 = \vec{a}_k^T \cdot \vec{a}_k = 1$ and $a_{k,\alpha} \geq 0$ for each k, and for each k, define a certain direction in the space of objective values and thus can either reflect one user preference and are determined in the beginning as part of the problem definition, or determined by the state of the art procedure for reference vectors as described in "A Reference Vector Guided Evolutionary Algorithm for Many-Objective Optimization", IEEE Transactions on Evolutionary Computation 20(5), 773-791 (2016) doi 10.1109/TEVC.2016.2519378 or ".Adaptation of Reference Vectors for Evolutionary Many-objective Optimization of Problems with Irregular Pareto Fronts", IEEE Congress on Evolutionary Computation (CEC), 1726-1733 (2019) doi 10.1109/CEC.2019.8790214, which can either be fixed reference vectors determined prior to iteration of the hybrid quantum-classical algorithms or adapted during the iterations in each iteration step t.

Each cost Hamiltonian $\mathcal{H}_\alpha$ represents one classical objective function $C_\alpha$, in the sense that the measurement basis states $|x\rangle$ are simultaneous eigenstates of all cost Hamiltonians and the eigenvalues of the problem Hamiltonians are given the value of the corresponding classical objective function of the corresponding classical solutions, x, i.e.

$$\mathcal{H}_\alpha|x\rangle = C_\alpha(x)\,|x\rangle$$

and where the mixing unitaries in each layer, $e^{-iX_k(\gamma_{X;l,k})}$, have freely choosable parameters $\gamma_{X;l,k}$ and are generated by $M$ parametrized mixing operators $X_\alpha(\gamma_{X;l,k})$ with k= 1, ..., $N_p$, where the mixing operators do not commute with the cost Hamiltonians, i.e., $\left[X_k(\gamma_{X;l,k}),\mathcal{H}_\alpha\right] \neq 0\,, \forall k, \alpha$, and therefore the mixing operators generate transitions between the measurement basis states, $X_k(\gamma_{X;l,k})|x_i\rangle = \sum_j \zeta_{k,ij}|x_j\rangle$ with $\zeta_{k,ij} \in \mathbb{C}$, and where the $N_s$ basis states which represent the set of solutions and which are encoded in the quantum state $|\psi_\gamma\rangle$ as superpositions, are extracted at each iteration by estimating the full state tomography, i.e., by estimating the spectral weight $\xi_{\gamma,i}$ with which each basis state $|x_i\rangle$ contributes to the final state $|\psi_\gamma\rangle$, which is given by the absolute square of the overlap, i.e.

$$\xi_{\gamma,i} = \left|\langle x_i|\psi_\gamma\rangle\right|^2 \quad,$$

and then selecting those $N_s$ classical solutions states which have the largest spectral weights, and adding those to the set of selected solutions $\mathbb{S}_t = \{x_i\}_{i=1}^{N_s}$ obtained in this iteration $t$.

According to another preferred embodiment the quantum component realizes parametrized quantum circuit (PQC) by implementing a unitary quantum operation $U(\gamma)$ which is composed of $N_L$ layers with different choosable sets of parameters as

$$U(\gamma) = \prod_{l=1}^{N_L} U_l(\gamma_l)$$

and where each layer $l$ comprises multiple mixing and phase operators with separately choosable parameter sets $\gamma_l \in$

$\{\gamma_{x;l}, \gamma_{v;l}\}$, and which has the form

$$U_l(\gamma_l) = e^{-i X_l(\gamma_{x;l})} e^{-i \gamma_{v;l} V}$$

where the phase unitaries in each layer $e^{-i\gamma_{v;l}V}$ have freely choosable parameters $\gamma_{v;l} \in \mathbb{R}$ and are generated by the operator $V$ which estimates the hypervolume in objective space which is spanned by a population of states as it is encoded by a quantum superposition of states, i.e.

$$V|\psi\rangle = f\left(\{\xi_l\}_{l=1}^{N_S}\right) HV\left(\{\vec{C}(x_l)\}_{l=1}^{N_S}\right)|\psi\rangle$$

where the function $HV\left(\{\vec{C}(x_l)\}_l^{N_S}\right)$ gives the hypervolume which is spanned by the objective value vectors $\vec{C}(x_l) = \{C_\alpha(x_l)\}_{\alpha=1}^{M}$ of the set of solutions $\{x_l\}_{l=1}^{N_S}$ and the function $f\left(\{\xi_l\}_{l=1}^{N_S}\right)$ has function values between zero and one, i.e. $0 \leq f\left(\{\xi_l\}_{l=1}^{N_S}\right) \leq 1$, and allows for a down-scaling of the hypervolume of a particular set of solutions in case the individual amplitudes of some of the contributing states are unfavorably small or the distribution of the amplitudes is too inhomogeneous,

and where each cost Hamiltonian $\mathcal{H}_\alpha$ represents one classical objective function $C_\alpha$, in the sense that the measurement basis states $|x\rangle$ are simultaneous eigenstates of all cost Hamiltonians and the eigenvalues of the problem Hamiltonians are given the value of the corresponding classical objective function of the corresponding classical solutions, x, i.e.

$$\mathcal{H}_\alpha|x\rangle = C_\alpha(x)|x\rangle$$

and where the mixing unitaries in each layer $e^{-iX_l(\gamma_{x;l})}$, haves freely choosable parameters $\gamma_{x;l} \in \mathbb{R}$ and are generated by the parametrized mixing operator $X_l(\gamma_{x;l})$, where the mixing operators do not commute with the cost Hamiltonians, i.e., $[X_l(\gamma_{x;l}), \mathcal{H}_\alpha] \neq 0, \forall \alpha, l$, and therefore the mixing operators generate transitions between the measurement basis states,

$$X_k(\gamma_{x;l})|x_i\rangle = \sum_j \zeta_{k,ij}|x_j\rangle \text{ with } \zeta_{k,ij} \in \mathbb{C}$$

It is further preferred that the mixing operator in each layer is given by a sum over all x-angular momentum operators of each qudit variable and where the coefficient of each individual angular momentum operators is given by the freely choosable parameter $\gamma_{x;k} \in \mathbb{R}$, i.e.,

$$X_k(\gamma_{x;k}) = \sum_{i=1}^{N} \gamma_{x;k,i} L_{x;i}$$

where $L_{x;i}$ is the x-angular momentum operators of the $i$th qubit or qudit with $i = 1, \ldots, N$, representing the $i$th classical search variable and $N$ the total number of qubits/qudits.

As an alternative embodiment, the mixing operator in each layer is given by a sum over all generalized Pauli X operators of each qudit variable as, for example, described in Y. Wang, Z. Hu, B. C. Sanders, and S. Kais, Qudits and High-Dimensional Quantum Computing, Frontiers in Physics 8 (2020), and where there is one coefficient for each physical qudit which are given by the freely choosable parameters $\gamma_{x;l,i} \in \mathbb{R}$, i.e.,

$$X_k(\gamma_{X;l,i}) = \sum_{i=1}^{N} \gamma_{X;l,i}\, \mathcal{X}_i$$

where $\mathcal{X}_i$ is the generalized Pauli X operator of the $i^{th}$ qubit or qudit with $i = 1, \ldots, N$, and is given by

$\mathcal{X}_i = \sum_{z=0}^{L-1} |(z+1)$ mod $L\rangle\langle z|$ and local qudit dimension $L$.

In a preferred embodiment the $N_s$ basis states which represent the set of solutions and which are encoded in the quantum state $|\psi_\gamma\rangle$ as superpositions, are extracted at each iteration by by sampling from the quantum state $|\psi_\gamma\rangle$, i.e. sampling x from the Born rule probability $P(x,\gamma) = |\langle x|\psi_\gamma\rangle|^2$ which is realized by repeatedly measuring the quantum state, and adding for each measured state $|x_m\rangle$ the corresponding classical solution $x_m$ to the set of selected states, $\mathbb{S}$ until $N_S$ different states have been measured and added to the set of selected states, $\mathbb{S} = \{x_i\}_{i=1}^{N_S}$.

The method and apparatus may further be applied to solve a multi-objective bi-directional electric vehicle charging problem where the target is to find a set $\mathbb{PS} = \{x_i\}_{i=1}^{N_{PF}}$ of Pareto optimal configurations of discrete integer variables $x = (\ell_0, \ell_1, \ldots, \ell_{Ntot})$, which encode a full charging and service schedule for a fleet of electric vehicles and where multiple objectives such as electricity cost for fulfilling all charging demands, customer satisfaction, maximizing utilization of renewable energies, minimizing electricity drawn from the grid, minimizing the peak electricity power consumption, etc are considered such that a good approximation of the Pareto front, $\mathbb{PF}$ is obtained.

The method and apparatus according to one of the above described configurations may be applied to obtain an efficient frontier of possible portfolio compositions as formulated by the Markowitz model of Modern portfolio theory by finding the compositions of a portfolio over time as specified by integer variables $x = \{\omega_{n's}\}$ which specify the investment amount into asses $n$ at time $s$ and where the efficient frontier is spanned by those portfolio compositions which have optimal tradeoffs between maximizing return and minimizing risk and thus pose a two-objective optimization problem.

The invention will now be further described with reference to the attached drawing, in which

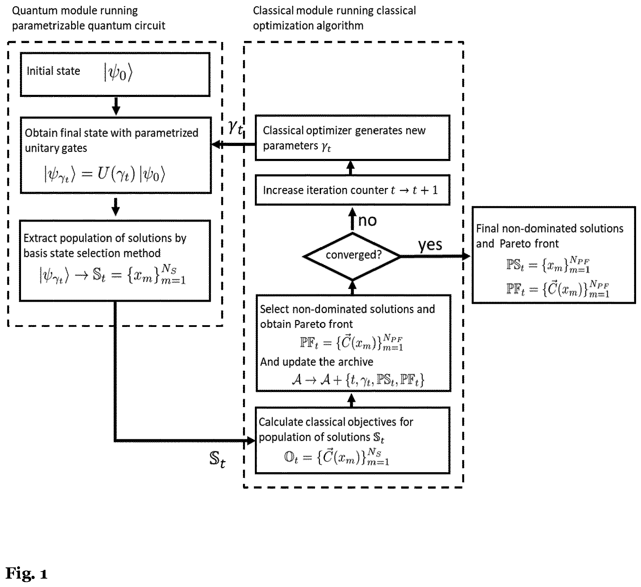

Fig. 1 shows a schematic of a hybrid quantum-classical computer system illustrating the method steps according to a preferred implementation of the invention.

The proposed computer implemented method and hybrid quantum-classical computer system target to solve combinatorial integer multi-objective optimization problems with two or more objectives to be minimized. Typically, these objectives cannot be minimized simultaneously by some optimal solutions since they are in tradeoff relations to each other. Therefore, the target of the multi-objective optimization approach is to find a whole set of different solutions, called the Pareto set, where each solution realizes one optimal tradeoff between the objectives. The set of solutions therefore should map all possible tradeoff between the objectives, which is called the Pareto front.

The proposed inventive method and apparatus enables the treatment of such problems natively on current NISQ quantum hardware. The crucial aspect of the present invention is provided by representing a full population of candidate solutions to the optimization problem as one quantum state and extracting whole sets of Pareto-optimal solutions from this one quantum state. According to the invention, the quantum circuits of the proposed computer implemented method and hybrid quantum-classical computer system increase the diversity of the population by utilization of all the cost function Hamiltonians corresponding to all classical objectives.

According to this description, the expression "classical" always refers to known computation as performed in the past using digital computer systems only.

The proposed computer implemented method and hybrid computer system comprises a classical computing component and a quantum computing component. Both components are configured to transfer and receive information from the respective other component such that a shared computation can be achieved in order to solve the multi objective integer optimization problem. A set of integer variables of the multi-objective integer optimization problem, $x = (a_1, a_2, \ldots, a_N)$, where $a_i \in [0, \ldots, L-1]$ are finite integers, are represented by the qubit (for $L = 2$) or qudit (for $L > 2$) degrees of freedom of the quantum hardware device, i.e.,

$$|x\rangle = |a_1, a_2, \ldots, a_N\rangle \ .$$

Each of those states is a basis state in the measurement basis and fulfils the orthonormality conditions

$$\langle x'|x \rangle = \langle a'_1, a'_2, \dots, a'_N | a_1, a_2, \dots, a_N \rangle \;=\; \delta_{a'_1, a_1} \cdots \delta_{a'_N, a_N}$$

where $\delta_{b,a}$ is the Kronecker delta,

$$\delta_{b,a} = \begin{cases} 1 & \text{if } a = b \\ 0 & \text{if } a \neq b \end{cases}.$$

This encoding means that all possible solutions to the original multi objective integer optimization problem are represented by the measurement basis states of the quantum computing component. One advantage of using a quantum computer for approaching this problem is given by the fact that a general quantum state is naturally a superposition of all basis states, i.e. a superposition of all possible solutions to the problem,

$$|\phi\rangle = \sum_{c=1}^{d_H} \xi_c \, |\mathbf{x}_c\rangle$$

with complex coefficient $\xi_c \in \mathbb{C}$ and where $\sum_c |\xi_c|^2 = 1$ and where $c = 1, \dots, d_H$ enumerates all basis states of the Hilbert space of dimensions $d_H = L^N$ for $N$ variables (i.e. qubits or qudits) with $L$ states per variable (i.e. qubits or qudits).

The invention utilizes a parametrized quantum circuit on the quantum computing component, which employs unitary gate operations that are applied to a predefined fixed initial state $|\psi_0\rangle$. Such application of the unitary gate operations leads to the final quantum state

$$|\psi\rangle = U(\gamma)|\psi_0\rangle .$$

According to the invention, this state encodes a full population of $N_S$ solutions candidates of the original problem,

$$|\psi\rangle = \sum_{i=1}^{N_S} \xi_i \, |\mathbf{x}_i\rangle + \sum_{j=N_S+1}^{d_H} \delta_j \, |\mathbf{x}_j\rangle$$

where the first sum are those basis states with large weights and which represents the full population, $\mathbb{S} = \{\mathbf{x}_i\}_{i=1}^{N_S}$, and the second sum is negligibly small, i.e. $\sum_{i=1}^{N_S} |\xi_i|^2 = 1 - \epsilon$ and $\sum_{j=N_S+1}^{d_H} |\delta_j|^2 = \epsilon \ll 1$, respectively, such that the final state truly encodes the solution population,

$$|\psi\rangle \approx \sum_{i=1}^{N_S} \xi_i \, |\mathbf{x}_i\rangle$$

A state selection mechanism, such as full state tomography, classical shadows or measurement-based sampling allows the full set of solutions to be extracted from the quantum state,

$$|\psi\rangle \Rightarrow \mathbb{S} = \{\mathbf{x}_m\}_{m=1}^{N_S} .$$

Suitable techniques are described in "Efficient quantum state tomography", Nat Commun 1,149 (2010) doi 10.1038/ncomms114, "Predicting many properties of a quantum system from very few measurements", Nat. Phys. 16, 1050-1057 (2020) doi 10.1038/S41567-020-0932-7 or "Quantum Computation and Quantum Information", Cambridge: Cambridge University Press. (2010) doi 10.1017/CB09780511976667. The unitaries of the current invention are specifically designed to increase the contributions to the superposition from different states, which provide the optimal trade-off solutions. That means, the population of candidate solutions represented by one quantum state will provide a good approximation to the Pareto set of solutions $\mathbb{PS}$,

$$|\psi\rangle = \sum_{i=1}^{N_{PF}} \xi_i |\mathbf{x}_i\rangle \quad \Leftrightarrow \quad \mathbb{PS} = \{\mathbf{x}_i\}_{i=1}^{N_{PF}} \quad.$$

In the proposed invention, the set of solutions will be sent from the quantum computing component to the classical computing component, where for each solution the vector of objective values will be calculated which generates the Pareto front,

$$\mathbb{PF} = \left\{\vec{C}(\mathbf{x}_i)\right\}_{i=1}^{N_{PF}} \quad,$$

Here, the vector $\vec{C}(x)$ represents the classical $M$ objective functions of the original problem,

$$\vec{C}(\mathbf{x}) = \{C_\alpha\}_{\alpha=1}^{M} = \left( C_1(\mathbf{x}), C_2(\mathbf{x}), \ldots, C_M(\mathbf{x}) \right)^T \quad.$$

The final result after executing the proposed method using the inventive hybrid quantum-classical computing system is the Pareto set of solutions $\mathbb{PS}$, which approximate the Pareto front $\mathbb{PF} = \left\{\vec{C}(\mathbf{x}_i)\right\}_{i=1}^{N_{PF}}$. In that way, the user can inspect the Pareto optimal solutions and then select the best tradeoff solutions for their application in mind. The proposed method and apparatus utilizing the PQC is effective in producing a good approximations to the Pareto front since all possible solutions are typically present in the superposition of the initial state $|\psi_0\rangle$ of the quantum computing component. The proposed phase operators in the PQC do assign different phases to each individual basis state $|\psi\rangle$. In that way, the classical optimizer can tune the parameters of the PQC to give the largest diversity and include mostly non-dominated solutions in the quantum state, which maximize hypervolume indicator which implies a good approximation to the true Pareto front.

Hereinafter, the invention will be described for two different implementation examples, which are typical for multi objective problems:

The operation of a fleet of electric vehicles (EVs) constitutes an archetypical optimization problem with several challenges. The central aspect of this operation is to provide a service to the customer such that for all vehicles, the requests of the customers can be fulfilled while at the same time reducing the electricity cost for charging all EVs as much as possible.

In one formulation of the problem, the target is to find the optimal charging schedule of a fleet of $N_{EV}$ electric vehicles (EVs) over $N_T$ time slots. The search variable x defines the charging schedule of the complete EV fleet. A schedule consists of $N_{EV} \cdot N_T$ discrete integer variables,

$$\mathbf{x} = \left( \ell_{1,1}, \ell_{2,1}, \ldots, \ell_{N_{EV},1}, \ell_{2,1}, \ldots, \ell_{n,s}, \ldots, \ell_{N_{EV},N_T} \right)$$

where each integer variable can have only one of $L$ values, $\ell_{n,s} \in [0, 1, \ldots, L\text{-}1]$, The value of the integer $\ell_{n,s}$ determines the charging power level of vehicle $n$ in time slot s, i.e. $p(s,n) = p_0 \ell_{n,s}$ where the $p_0$ is the conversion constant and thus defines the spacing between the charging levels. There are four common objectives, which should all be simultaneously minimized. These are expressed by the following four objective functions:

$$C_1(\mathbf{x}) = \frac{1}{N_1} \sum_{s=1}^{N_T} \mathcal{P}(s) \left( \sum_{n=1}^{N_{EV}} p_0 \ell_{n,s} - PV(s) \right) \quad (OBJ1, \text{total cost})$$

$$C_2(\mathbf{x}) = \frac{1}{N_2} \sum_{n=1}^{N_{EV}} \left( \sum_{s=1}^{N_T} p_0 \ell_{n,s} - E_{tot,n} \right)^2 \qquad (OBJ2, \text{fairness}),$$

$$C_3(\mathbf{x}) = \frac{1}{N_3} \sum_{s=1}^{N_T} \left( \sum_{n=1}^{N_{EV}} p_0 \ell_{n,s} - PV(s) \right)^2 \qquad (OBJ3, \text{PV usage}),$$

$$C_4(\mathbf{x}) = \frac{1}{N_4} \sum_{s=1}^{N_T} \left( \sum_{n=1}^{N_{EV}} p_0 \ell_{n,s} \right)^2 \qquad (OBJ4, \text{power variations}).$$

with the normalization constants $N_1 = N_T N_{EV} \mathcal{P}_{max}/p_0$, $N_2 = N_T^2 N_{EV}(L-1)/p_0^2$, $N_3 = N_T N_{EV}^2/p_0^2$ , and $N_4 = N_T N_{EV}^2/p_0^2$ to ensure that the numerical values of the objectives are of approximately the same order of magnitude.

The first objective (*OBJ*1) represents to total electricity cost for the complete charging schedule. *PV(s)* denotes the surplus energy produced by a photo-voltaic (PV) system at time slot s which is available for charging the EVs, and the function $\mathcal{P}(s)$ gives the price for buying or selling energy from or to the grid at time slot *s*. $\mathcal{P}_{max}$ denotes the maximal unit-price for electricity.

When the total electricity demand is larger than the PV surplus, energy needs to be bought from the grid, while when is smaller the term in brackets reverses sign end energy is sold to the grid leading to a negative cost, i.e. income.

The second objective (*OBJ*2) represents a measure for fairness between the different EVs/customers by minimizing the difference between the desired energy of each vehicle, $E_{tot,n}$, and the energy provided to each EV/customer. This is achieved since this term is proportional to the variance of the difference between the charging energy provided to each EV n and its desired value, $E_{tot,n}$, which strongly favors equal distribution.

The third objective (*OBJ*3) tries to only use the PV surplus energy for charging the EVs at each time slot s, and consequently the objective function tries to minimize the difference between used surplus PV energy and current total charging energy at each time slot. Minimizing this obj ective is a means to make the service operation independent of the electricity grid.

The fourth objective (*OBJ*4) targets the equal distribution of the charging power over the time slots, and in particular tries to reduce peaks in the charging power at all time slots. The reasoning behind this is two-fold: (i) for company settings, the peak electricity power over a billing period has a direct influence on the charged electricity bill and therefore strong demand peaks need to be avoided (ii) strong variations in the electricity demand generally put a lot of pressure on the energy grid provider which needs to balance these out. Both aspects are met by reducing the overall variation over time of the total energy demand, i.e. the variance, as formulated in this objective.

The problem characterized by the objectives (OBJ1) - (OBJ4) of the above described example defines a combinatorial integer multi-objective optimization problem with $M = 4$ objectives, which all need to be minimized. However, the present invention is not limited to four objectives and less or more objectives may define the multi objective optimization problem. These objectives typically cannot be minimized simultaneously by some optimal solutions since they are in tradeoff relations to each other. Therefore, the target of the multi-objective optimization approach according to the invention is to provide a computationally efficient way to find a whole set of different solutions, called the Pareto set, where each solution realizes one optimal tradeoff between the objectives. The set of solutions therefore should map all possible tradeoff between the objectives which is called the Pareto front.

For the EV charging problem the discrete search variables are given by the variables $\mathbf{x} = (\ell_{1,1}, \ell_{2,1}, ..., \ell_{n,1}, \ell_{2,1}, ..., \ell_{n,s}, ..., \ell_{N_{EV},N_T})$ with $\ell_{n,s} \in [0, 1, ..., L-1]$ which encode the full charging schedule of all EVs. The classical cost functions, i.e. the objectives to be minimized are expressed with those variables, as is exemplarily done in (OBJ1) - (OBJ$_4$).

In the EV charging problem the encoding into the quantum formulation is as follows: each qudit of the quantum computing component represents one charging power level $\ell_{n,s} \in [0, ..., L-1]$ of one EV $n \in [1, ..., N_{EV}]$ in one time slot $s \in [1, ..., N_T]$. The quantum states of the measurement basis are given by

$$|x\rangle = \left| \ell_{1,1}, \ell_{2,1}, \ldots, \ell_{N_{EV},1}, \ell_{2,1}, \ldots, \ell_{n,s}, \ldots, \ell_{N_{EV},N_T} \right\rangle \quad (ENC)$$

with $\ell_{n,s} \in [0,1,\ldots,L-1]$ which represent all the different possibilities for the charging schedule of the whole EV fleet. This encoding implies that all possible solutions to the EV charging problem are represented by the measurement basis states of the quantum circuit. One advantage of using a quantum computer for approaching this problem is given by the fact that a general quantum state in this basis is naturally a superposition of all basis states, i.e. a superposition of all possible solutions to the problem,

$$|\phi\rangle = \sum_x c_x |x\rangle$$

with complex coefficient $c_x \in \mathbb{C}$ and where $\sum_x |c_x|^2 = 1$.

The classical M objective functions $C_1(x)$ to $C_4(x)$ as defined above are represented by $M$ cost Hamiltonians. Their functional form is given by a quadratic polynomial in the search variables. This directly allows to formulate the corresponding quantum Hamiltonians for each objective by taking the classical objective functions $C_1(x)$ to $C_4(x)$ and replacing the search variables $\ell_{n,s}$ which specify the charging level of EV $n$ in times slot s with the corresponding z-angular momentum operator $L_{z;n,s}$ of the qudit encoding the corresponding variable, i.e. by using the replacement rule

$\ell_{n,s} \rightarrow L_{z;n,s} + \frac{L-1}{2}$. This leads to cost Hamiltonians $\mathcal{H}_1$ to $\mathcal{H}_4$ which are also quadratic polynomials in the angular momentum operators, which therefore can be directly implemented with the elementary gate- or pulse-operators on current quantum hardware without further pre-processing or approximation. The quadratic form is therefore the starting point for current state of the art quantum approaches, as it can be found for example in "Encoding-Independent Optimization Problem Formulation for Quantum Computing", arXiv:2302.03711 (2023) or "Noisy intermediate-scale quantum (NISQ) algorithms", Rev. Mod. Phys. 94, 015004.

The measurement basis states are eigenstates to the z-angular momentum operators $L_{z;n,s}$ and the eigenvalues are the charging levels, i.e.

$$\left( L_{z;n,s} + \frac{L-1}{2} \right) \left| \ell_{1,1}, \ldots, \ell_{n,s}, \ldots, \ell_{N_{EV},N_T} \right\rangle = \ell_{n,s} \left| \ell_{1,1}, \ldots, \ell_{n,s}, \ldots, \ell_{N_{EV},N_T} \right\rangle .$$

With this, the explicit form of the corresponding cost Hamiltonians representing the objective functions are

$$\mathcal{H}_1 = \frac{1}{N_1} \sum_{s=1}^{N_T} \mathcal{P}(s) \left( \sum_{n=1}^{N_{EV}} p_0 \cdot \left( L_{z;n,s} + \frac{L-1}{2} \right) - PV(s) \right) \quad (HAM1, \text{total cost})$$

$$\mathcal{H}_2 = \frac{1}{N_2} \sum_{n=1}^{N_{EV}} \left( \sum_{s=1}^{N_T} p_0 \cdot \left( L_{z;n,s} + \frac{L-1}{2} \right) - E_{tot,n} \right)^2 \quad (HAM2, \text{fairness}),$$

$$\mathcal{H}_3 = \frac{1}{N_3} \sum_{s=1}^{N_T} \left( PV(s) - \sum_{n=1}^{N_{EV}} p_0 \cdot \left( L_{z;n,s} + \frac{L-1}{2} \right) \right)^2 \quad (HAM3, \text{PV usage}),$$

$$\mathcal{H}_4 = \frac{1}{N_4} \sum_{s=1}^{N_T} \left( \sum_{n=1}^{N_{EV}} p_0 \cdot \left( L_{z;n,s} + \frac{L-1}{2} \right) \right)^2 \quad (HAM4, \text{power variations}).$$

The measurement basis states are also simultaneous eigenstates of these cost Hamiltonians (since the latter are polynomials in the $L_{z;n,s}$), and the eigenvalues are given by the value of the objective functions of the corresponding configuration,

$$\mathcal{H}_a \left| \ell_{1,1}, \dots, \ell_{n,s}, \dots, \ell_{N_{EV},N_T} \right) = C_a \left( \ell_{1,1}, \dots, \ell_{n,s}, \dots, \ell_{N_{EV},N_T} \right) \left| \ell_{1,1}, \dots, \ell_{n,s}, \dots, \ell_{N_{EV},N_T} \right).$$

The quantum computing component, which executes the parametrized quantum circuit (PQC), prepares the state,

$$|\psi\rangle = \prod_{l=1}^{N_L} U_l(\gamma_l) |\psi_0\rangle \quad (PQC)$$

which consists of $N_L$ different unitary operations $U_l$ called layers and where each unitary operator is freely parametrizable with a set of parameters $\gamma_l$ ($l = 1, \dots, N_L$). The initial state of the circuit is given by the equal superposition of all possible states,

$$|\psi_0\rangle = \frac{1}{\sqrt{d_H}} \sum_{x} |x\rangle \ ,$$

where $d_H = L^{N_{EV} N_T}$ is the dimensionality of the Hilbert space for $N_{EV}$ EVs, $N_T$ time slots, and where each time slot can be in one of $L$ charging levels, encoded by $N_{EV} \cdot N_T$ qudits with local dimensionality $L$. In the current example, the unitary operation in each layer $l$ has the form

$$U_l(\gamma_l) = \prod_{k=1}^{N_P} e^{-iX(\gamma_{X;l,k})} e^{-i\gamma_{P;l,k} P_k}$$

which is a product over $N_P$ different terms and each product term consists of a so-called mixing term, $\sim e^{-iX(\gamma_{X;l,k})}$ and a phase operator $\sim e^{-i\gamma_{P;l,k} P_k}$.

The mixing unitary has $N_P N_{EV} N_T$ freely choosable parameters $\gamma_{X;l,k,n,s} \in \mathbb{R}$ and it is generated by the Hermitian mixing operator $X$. The mixing operator in this example is given by the sum over all x-angular momentum operators of each physical qudit, i.e.,

$$X(\gamma_{X;l,k}) = \sum_{s=1}^{N_T} \sum_{n=1}^{N_{EV}} \gamma_{X;l,k,n,s} L_{x;n,s} \ , \quad (MIXEX)$$

where $L_{x;n,s}$ is the usual x-angular momentum operator of the physical qudit encoding the charging power at time slot s of EV $n$. The action of $L_{x;n,s}$ is given by the standard action of angular momentum operators,

$$L_{x;n,s} \left| \ell_{1,1}, \dots, \ell_{n,s}, \dots, \ell_{N_{EV},N_T} \right)$$
$$= \frac{1}{2} \sqrt{(L - \ell_{n,s} - 2)(\ell_{n,s} + 2)} \left| \ell_{1,1}, \dots, \ell_{n,s} + 1, \dots, \ell_{N_{EV},N_T} \right)$$
$$+ \frac{1}{2} \sqrt{(L - \ell_{n,s}) \ell_{n,s}} \left| \ell_{1,1}, \dots, \ell_{n,s} - 1, \dots, \ell_{N_{EV},N_T} \right)$$

and as such generates transitions between and creates superpositions of basis states, i.e. different solutions.

Each of the $N_P$ phase terms in each layer comes with one freely chooseable parameter, $\gamma_{P;l,k} \in \mathbb{R}$ and each term is generated by a Hermitian operator which is one specific sum over the four cost Hamiltonians of (*HAM*1) - (*HAM*4), i.e.

$$P_k = \sum_{\alpha=1}^{4} a_{k,\alpha} \mathcal{H}_{\alpha,} \qquad (PHASEEX)$$

The coefficients $\alpha_{k,\alpha} \geq 0$ define reference vectors $\vec{\alpha}_k$ which need to fulfill the condition $\sum_{\alpha=1}^{4} a_{k,\alpha}^2 = \vec{a}_k^T \cdot \vec{a}_k = 1$, i.e., the vectors $\vec{\alpha}_k$ be unit vectors and thus each $\vec{\alpha}_k$ defines a direction in the objective space. These are the quantum analog of a the reference vectors in classical multi-objective optimization as described in "A Reference Vector Guided Evolutionary Algorithm for Many-Objective Optimization", IEEE Transactions on Evolutionary Computation 20(5), 773-791 (2016) doi 10.1109/TEVC.2016.2519378. In the current example it is assumed that $N_P = 5$ (i.e. $k = 1, ... ,5$) reference vectors are used and the reference vectors $\vec{\alpha}_k$ are determined by one of the standard approaches from literature as described in, for example, "A Reference Vector Guided Evolutionary Algorithm for Many-Obj ective Optimization", IEEE Transactions on Evolutionary Computation 20(5), 773-791 (2016) doi 10.1109/TEVC.2016.2519378, or ".Adaptation of Reference Vectors for Evolutionary Many-objective Optimization of Problems with Irregular Pareto Fronts", IEEE Congress on Evolutionary Computation (CEC), 1726-1733 (2019) doi 10.1109/CEC.2019.8790214.

In a simple but representative case the quantum circuit has only one layer, $N_L = 1$, in which case the quantum circuit prepares the following state,

$$\left| \psi \left( \{ \gamma_{X;k}, \gamma_{P;k} \}_{k=1}^{N_P=5} \right) \right\rangle = \prod_{k=1}^{5} e^{-i \sum_{s=1}^{N_T} \sum_{n=1}^{N_{EV}} \gamma_{X;k,n,s} L_{x;n,s}} e^{-i \gamma_{P;k} \sum_{\alpha=1}^{4} a_{k,\alpha} \mathcal{H}_\alpha} \left| \psi_0 \right\rangle (PQCEX)$$

with the reference vectors $\alpha_{k,\alpha}$ and the cost Hamiltonians of ($HAM$1) - ($HAM$4). This parametrized quantum state depends on $5(N_T N_{EV} + 1)$ parameters $\left\{ \{ \gamma_{X;k,n,s} \}_{n,s}^{N_{EV},N_T} , \gamma_{P;k} \right\}_{k=1}^{N_P=5}$ which need to be optimally determined by a classical optimization algorithm.

The claimed method executed on the claimed hybrid quantum-classical computer system comprises the following steps. A classical optimization algorithm $\mathcal{COA}$ such as a stochastic gradient descent (SGD) is initiated on the classical computing component. The search parameters of this classical optimizer are given by the 10 parameters of the PQC, i.e.,

$$\gamma = \left\{ \{ \gamma_{X;k,n,s} \}_{n,s}^{N_{EV},N_T} , \gamma_{P;k} \right\}_{k=1}^{N_P=5} \in \mathbb{R}^D \qquad \text{with } D = 5(N_T N_{EV} + 1) \quad .$$

Additionally, an archive A maybe initiated on the classical computing component where search parameters, candidate solutions and corresponding values of the objective functions will be stored. Further, the quantum apparatus is configured such that the measurement basis represents classical solutions as depicted in ($ENC$) and the quantum circuit produces the parametrized quantum state $(PQCEX)$ with the corresponding gate operations $(MIXEX)$ and $(PQCEX)$ and ($HAM$1) - ($HAM$4). Then, an iteration counter is initialized with t = 0 and the following steps are iterated:

i) Based on its internal state, the classical optimizer algorithm generates a set of search parameter values,

$$\mathcal{COA} \rightarrow \gamma^t = \left\{ \{ \gamma_{X;k,n,s}^t \}_{n,s}^{N_{EV},N_T} , \gamma_{P;k}^t \right\}_{k=1}^{N_P=5}$$

and the classical computing components sends these parameter values to the quantum apparatus.

ii) The quantum apparatus receives the parameter set $\gamma^t = \left\{ \{ \gamma_{X;k,n,s}^t \}_{n,s}^{N_{EV},N_T} , \gamma_{P;k}^t \right\}_{k=1}^{N_P=5}$ from the classical computing component and adjusts its unitary gate operators such that it produces the quantum state specified by $(PQCEX)$, i.e.

$$|\psi(\gamma^t)\rangle = \prod_{k=1}^{N_P=5} e^{-i\sum_{s=1}^{N_T}\sum_{n=1}^{N_{EV}}\gamma_{X,k,n,s}^t L_{x,n,s}} e^{-i\gamma_{P,k}^t \sum_{a=1}^{4} a_{k,a}\mathcal{H}_a} |\psi_0\rangle \ ,$$

when it is executed.

Then the quantum apparatus executes the quantum circuit. The one resulting quantum state $|\psi(\gamma^t)\rangle$ then encodes a whole population of $N_s$ candidate solutions as superposition,

$$|\psi(\gamma^t)\rangle = \sum_{i=1}^{N_s} \xi_i(\gamma^t)|\mathbf{x}_i\rangle + \sum_{j=N_S+1}^{d_H} \delta_j(\gamma^t) |\mathbf{x}_j\rangle$$

where the first sum are those basis states with large weights and which represents the full population, $\mathbb{S} = \{\mathbf{x}_i\}_{i=1}^{N_S}$,

and the second sum is negligibly small, i.e. $\sum_{i=1}^{N_s}|\xi_i(\gamma^t)|^2 = 1 - \epsilon$ and $\sum_{j=N_S+1}^{d_H}|\delta_j(\gamma^t)|^2 = \epsilon$ with $\epsilon$ much smaller than 1, respectively, such that the final state truly encodes the solution population,

$$|\psi(\gamma^t)\rangle \approx \sum_{i=1}^{N_s} \xi_i(\gamma^t)|\mathbf{x}_i\rangle.$$

The set of $N_S$ solutions $\mathbb{S}_t$ at iteration t, is extracted from one quantum state as those $N_S$ basis states which have the largest amplitudes.

One way to extract those solutions from the quantum state practically can be through repeated sampling. There, the quantum state is prepared and measured with the same parameters $\gamma^t$ a plurality of times (i.e., $N_{measure} > N_s$), where each measurement results in one basis state, i.e., one solution,

$$|\psi(\gamma^t)\rangle \xRightarrow{measurement \ \#m} |x_m\rangle \xrightarrow{readout} x_m$$

and collecting the measurement results in a list, from which the $N_s$ most frequent measurement results are then selected. For large enough number of measurements, this sampling procedure indeed selects those basis states with the largest amplitudes, as each individual measurement selects a basis state according to the standard Born-rule probability, Probability of measuring $|x\rangle$: $P(x,<\gamma^t) = |\langle x|\psi(\gamma^t)\rangle|^2$ .

Another way could be to perform a full state tomography protocol or classical shadow tomography (see e.g. "Efficient quantum state tomography" Nat Commun 1,149 (2010), doi 10.1038/ncomms1147, or "Predicting many properties of a quantum system from very few measurements", Nat. Phys. 16, 1050-1057 (2020). https://doi.org/10.1038/s41567-020-0932-7) and explicitly selecting the basis states with the largest probabilities.

In any case, the procedure is such that the with the present invention, the quantum computing component extracts a whole population $\mathbb{S}_t = \{\mathbf{x}_m\}_{m=1}^{N_S}$ of solutions from the one quantum state $|\psi(\gamma^t)\rangle$ and then sends it to the classical computing apparatus for further processing.

iii) The classical computing component receives the population of solutions $\mathbb{S}_t = \{\mathbf{x}_m\}_{m=1}^{N_S}$ from the quantum computing component and stores it for further processing in an archive $\mathcal{A}$. Then, all objective function values from equations (OBJ1) to (OBJ4) are computed for each of the solutions in the population, which results in a set of objective value vectors $\mathbb{O}_t = \{\vec{C}(\mathbf{x}_m) \ \forall \mathbf{x}_m \in \mathbb{S}_t\}$. From this set of objective value vectors, the set of non-dominated solutions are selected, $\mathbb{PF}_t = \{\vec{C}(\mathbf{x}_i)\}_{i=1}^{N_{PF}}$. This represents the approximation of the Pareto front at iteration t and the corresponding set of solutions is an estimate of the Pareto set $\mathbb{PS}_t = \{\mathbf{x}_l\}_{l=1}^{N_{PF}}$.

Form this set of nondominated solutions, the hypervolume indicator $HV(\mathbb{PF}_t)$ is calculated, which in turn is used to calculate the fitness value $f$ associated with the parameters of the PQC,

$$f_t \equiv f(\gamma^t) = -HV(\mathbb{PF}_t).$$

The fitness value $f_t$ is then fed back into the classical optimization algorithm

$$\mathcal{COA} \leftarrow f(\gamma^t)$$

and the optimizer updates its internal state accordingly.

Additionally, the search parameters $\gamma^t$, the corresponding fitness value $f(\gamma^t)$, the current estimate of the Pareto front $\mathbb{PF}_t$, and the corresponding Pareto set of candidate solutions $\mathbb{PS}_t$, are added to the archive,

$$\mathcal{A} \rightarrow \mathcal{A} + \{t, \gamma^t, f(\gamma^t), \mathbb{PS}_t, \mathbb{PF}_t\}$$

iv) Thereafter, a convergence criterion is checked on the classical computing component. This can be, for example, whether the maximally allowed number of cost function evaluations has been reached, or if the improvement of the fitness value $f(\gamma^t)$ over the last couple of iterations was not enough compared to a given threshold.

 a. If the convergence criterion is met the optimization is stopped and as the final result the final Pareto front and corresponding Pareto set are obtained by selecting all the non-dominated solutions from all approximations of the Pareto front of each iteration $\mathbb{PF}_{Final} = NonDominatedSolutions\left(\{\mathbb{PF}_{t'}\}_{t'=1}^{t}\right)$.

 b. If the convergence criterion is not met, the process is repeated from step i). above.

The final result is the Pareto set of solutions $\mathbb{PS}_{Final} = \{\mathbf{x}_l\}_{l=1}^{N_{PF}}$ which approximate the Pareto front $\mathbb{PF}_{Final} = \left\{\vec{C}(\mathbf{x}_l)\right\}_{l=1}^{N_{PF}}$, which is output for further evaluation or control of a charging system.

The proposed method and hybrid computer system utilizing the PQC is effective in producing a good approximations to the Pareto front since all possible solutions are typically present in the superposition of the initial state of the quantum apparatus. The phase operators in the PQC do assign different phases to each individual basis state based on the values of the reference vectors used in the phase operators of Eq. *(PQCEX)*. In that way, the classical optimizer can tune the parameters of the PQC to give the largest diversity and include mostly non-dominated solutions in the quantum state which maximize hypervolume indicator.

The set of Pareto optimal solutions serves as a basis for implementing an efficient control of the EV charging and scheduling service. A solution selection routine can be implemented, where the best fitting solutions are automatically determined from the whole set of Pareto optimal solutions. The natural solution selection routine is to utilize state of the art knee point detection methods as, for example, described in "Performance Analysis on Knee Point Selection Methods for Multi-Objective Sparse Optimization Problems", IEEE Congress on Evolutionary Computation, 1-8 (2018) doi 10.1109/CEC.2018.8477915 or "A Multi-objective Evolutionary Algorithm for "Finding Knee Regions Using Two Localized Dominance Relationships", IEEE Transactions on Evolutionary Computation 25(1), 145-158 (2021) doi 10.1109/TEVC.2020.3008877. Knee-points naturally provide the preferred best tradeoff solutions.

The second application example regards a Markowitz portfolio optimization. The target of Markowitz portfolio optimization is to manage a portfolio of financial assets over a period of time such that the expected return is maximized, while at the same time the risk is minimized( see e.g., "Computational aspects of alternative portfolio selection models in the presence of discrete asset choice constraints", Quantitative finance 1(5), 489-501 (2001), "Solving the Optimal Trading Trajectory Problem Using a Quantum Annealer", IEEE Journal of Selected Topics in Signal Processing 10(6), 1053-1060, (2016) doi 10.1109/JSTSP.2016.2574703, or "Dynamic portfolio optimization with real datasets using quantum processors and quantum-inspired tensor networks" Phys. Rev. Research 4, 013006 (2022) for recent introductions). As these two objectives are usually in a tradeoff relation, it is desired to map the efficient frontier, i.e., the Pareto front of best possible tradeoff solutions.

Technically the problem consists of determining the compositions of a portfolio of financial assets as specified by the share $\omega_{n,s}$ of asset n, with $n = 1, ... , N_{Asset}$ at time s with s = 1, ..., $N_T$ for a fixed time window. Usually rebalancing, i.e., changing the portfolio composition is done a fixed predefined times which leads to these discretized time steps. Additionally, it is common for funds to trade assets in discrete junks, which leads to the shares $\omega_{n,s}$ to be representable by integer variables, i.e. $\omega_{n,s} \in [0, ..., L-1]$.

The two objectives of this problem are formulated as

$$C_1(\omega) = \sum_{s=1}^{N_T} \sum_{n=1}^{N_{Asset}} \left[ \mu_{n,s} \, \omega_{n,s} - v_{n,s} \, |\omega_{n,s+1} - \omega_{n,s}| \right] \qquad (OBJ1, \text{ Expected return})$$

$$C_2(\omega) = \sum_{s=1}^{N_T} \sum_{n=1}^{N_{Asset}} \omega_{n,s} \, \Sigma_{nm,s} \, \omega_{m,s} \qquad (OBJ2, \text{ Risk})$$

Here $\mu_{n,s}$ is the forecasted return on asset n at time s and $v_{n,s}$ is the transaction cost when changing the share of asset *n* from time step s -1 to time step s in the portfolio.

The first term thus gives the accumulated overall expected return for the complete portfolio over the considered time horizon.

In the second objective $\Sigma_{nm,s}$ denotes the covariance of assets n and m at time s and the objective represents the covariance of the expected portfolio return summed over all times. This gives a measure for risk since (a) large covariance implies that the true return can differ largely form the expected returns, while small covariance implies the true return is similar to the expected return, and (b) large covariance between two assets implies correlations between the assets which in-turn reduces the robustness of the portfolio and thus makes the portfolio more risky.

The two-objective portfolio optimization problem is approached with the proposed method and hybrid quantum-classical computing system by representing the integer variables describing the shares in the portfolios, $\omega_{n,s}$, as the measurement basis states of the quantum apparatus,

$$|\mathbf{x}\rangle = |\omega_{1,1}, \omega_{2,1}, ... \, \omega_{N_{Assets},1}, \omega_{1,2}, ..., \omega_{n,s}, ..., \omega_{N_{Assets},N_T}\rangle \qquad (ENC)$$

and formulating the two cost Hamiltonians in terms of the z -angular momentum operator $L_{z;n,s}$ of the qudit encoding the corresponding variable, i.e. be using the replacement rule $\omega_{n,s} \to L_{z;n,s} + \frac{L-1}{2}$. The measurement basis states are eigenstates to these operators and the eigenvalues are the shares of the asset in the portfolio, i.e.

$$\left( L_{z;n,s} + \frac{L-1}{2} \right) |\omega_{1,1}, \omega_{2,1}, ... \, \omega_{N_{Assets},1}, \omega_{1,2}, ..., \omega_{n,s}, ..., \omega_{N_{Assets},N_T}\rangle$$
$$= \omega_{n,s} \, |\omega_{1,1}, \omega_{2,1}, ... \, \omega_{N_{Assets},1}, \omega_{1,2}, ..., \omega_{n,s}, ..., \omega_{N_{Assets},N_T}\rangle \, .$$

With this, the cost Hamiltonians are written as

$$\mathcal{H}_1 = \sum_{s=1}^{N_T} \sum_{n=1}^{N_{Asset}} \left[ \mu_{n,s} \left( L_{z;n,s} + \frac{L-1}{2} \right) - v_{n,s} \, |L_{z;n,s+1} - L_{z;n,s}| \right] \qquad (HAM1)$$

$$\mathcal{H}_2 = \sum_{s=1}^{N_T} \sum_{n=1}^{N_{Asset}} \left( L_{z;n,s} + \frac{L-1}{2} \right) \Sigma_{nm,s} \left( L_{z;m,s} + \frac{L-1}{2} \right) \qquad (HAM2) \, .$$

The measurement basis states are also simultaneous eigenstates of these cost Hamiltonians and the eigenvalues are given by the value of the objective functions of the corresponding configuration,

$$\mathcal{H}_\alpha |\omega_{1,1}, \dots, \omega_{n,s}, \dots, \omega_{N_{Assets}, N_T}\rangle$$
$$= C_\alpha(\omega_{1,1}, \dots, \omega_{n,s}, \dots, \omega_{N_{Assets}, N_T}) |\omega_{1,1}, \dots, \omega_{n,s}, \dots, \omega_{N_{Assets}, N_T}\rangle.$$

In this example, the quantum computing component which executes the parametrized quantum circuit PQC, prepares a state using two layers,

$$|\psi\rangle = U(\gamma_2)\, U(\gamma_1)|\psi_0\rangle \quad (PQC)$$

where the unitary operations U are freely parametrizable with a set of parameters $\gamma = \{\gamma_1, \gamma_2\}$. The initial state of the circuit is given by the equal superposition of all possible states,

$$|\psi_0\rangle = \frac{1}{\sqrt{d_H}} \sum_x |x\rangle \,,$$

where $d_H = L^{N_{Assets} N_T}$ is the dimensionality of the Hilbert space for $N_{Assets}$ assets, $N_T$ time slots and where the share of each asset can bet between zero and $L$ -1, which are encoded by $N_{Assets} \cdot N_T$ qudits with local dimension $L$. In the current example, the unitary operation in each layer $l = 1, 2$ has the form

$$U(\gamma_l) = \prod_{\alpha=1}^{2} e^{-i\gamma_{X;l,\alpha} X}\, e^{-i\gamma_{H;l,\alpha} \mathcal{H}_\alpha}$$

which is a product over two different terms and each product term consists of a so-called mixing term $\sim e^{-i\gamma_{X;l,\alpha} X}$ and a phase operator $\sim e^{-i\gamma_{H;l,\alpha} H_\alpha}$.

The mixing unitary has freely choosable parameters $\gamma_{X;l,\alpha} \in \mathbb{R}$ and it is generated by the Hermitian mixing operator $X$. The mixing operators in this example is given by the sum over all $x$-angular momentum operators of each qudit, i.e.,

$$X = \sum_{s=1}^{N_T} \sum_{n=1}^{N_{Assets}} L_{x;\,n,s} \,, \quad (MIXEX)$$

where $L_{x;n,s}$ is the usual $x$-angular momentum operator of the qudit encoding share of asset $n$ at time slot s. The action of $L_{x;n,s}$ is given by the standard action of angular momentum operators,

$$L_{x;n,s} |\omega_{1,1}, \dots, \omega_{n,s}, \dots, \omega_{N_{Assets}, N_T}\rangle$$
$$= \frac{1}{2}\sqrt{(L - \omega_{n,s} - 2)(\omega_{n,s} + 2)}\, |\omega_{1,1}, \dots, \omega_{n,s}, \dots, \omega_{N_{Assets}, N_T}\rangle$$
$$+ \frac{1}{2}\sqrt{(L - \omega_{n,s})\omega_{n,s}}\, |\omega_{1,1}, \dots, \omega_{n,s}, \dots, \omega_{N_{Assets}, N_T}\rangle$$

and as such generates transitions between and creates superpositions of basis states, i.e., different solutions.

Each of the two phase terms in each layer comes with one freely chooseable parameter, $\gamma_{H;l,\alpha} \in \mathbb{R}$ and each term is generated by one cost Hamiltonians of (HAM1) and (HAM2).

Putting it all together, the quantum circuit prepares the following state,

$$\left|\psi\left(\left\{\gamma_{X;l,1},\gamma_{H;l,1},\gamma_{X;l,2},\gamma_{H;l,2}\right\}_{l=1}^{2}\right)\right\rangle=\prod_{l=1}^{2}e^{-i\,\gamma_{X;l,2}\,X}e^{-i\gamma_{H;l,2}\,\mathcal{H}_{2}}e^{-i\,\gamma_{X;l,1}\,X}e^{-i\gamma_{H;l,1}\,\mathcal{H}_{1}}\left|\psi_{0}\right\rangle\quad(PQCEX)$$

This parametrized quantum state depends on 8 parameters $\left\{\gamma_{X;l,1},\gamma_{H;l,1},\gamma_{X;l,2},\gamma_{H;l,2}\right\}_{l=1}^{2}$ which need to be optimally determined by a classical optimization algorithm.

The proposed method and apparatus executes the following steps:

First, a classical optimization algorithm $\mathcal{COA}$ such as a stochastic gradient descent SGD is initiated on the classical computing component. The search parameters of this classical optimizer are given by the 8 parameters of the

PQC, i.e., $\gamma=\left\{\gamma_{X;l,1},\gamma_{H;l,1},\gamma_{X;l,2},\gamma_{H;l,2}\right\}_{l=1}^{2}\in\mathbb{R}^{D}$ with D = 8. Additionally, an archive $\mathcal{A}$ is initiated on the classical computing component, where search parameters, candidate solutions and corresponding values of the objective functions will be stored.

Second, the quantum computing component is configured such that the measurement basis represents classical solutions as depicted in (*ENC*) and the quantum computing component produces the parametrized quantum state *(PQCEX)* with the corresponding gate operations (*MIXEX*) and *(PQCEX)* with (*HAM*1) and (*HAM*2). Then, an iteration counter is initialized with $t$ = 0 and the following steps are iterated:

i) Based on its internal state, the classical optimizer algorithm generates a set of search parameter values,

$$\mathcal{COA}\rightarrow\gamma^{t}=\left\{\gamma_{X;l,1}^{t},\gamma_{H;l,1}^{t},\gamma_{X;l,2}^{t},\gamma_{H;l,2}^{t}\right\}_{l=1}^{2}$$

and the classical computing component sends these parameter values to the quantum computing component.

ii) The quantum computing component receives the parameter set

$$\gamma^{t}=\left\{\gamma_{X;l,1}^{t},\gamma_{H;l,1}^{t},\gamma_{X;l,2}^{t},\gamma_{H;l,2}^{t}\right\}_{l=1}^{2}$$

and adjusts its unitary gate operators such that it produces the quantum state specified by *(PQCEX)*, i.e.

$$\left|\psi(\gamma^{t})\right\rangle=\prod_{l=1}^{2}e^{-i\,\gamma^{t}{}_{X;l,2}\,X}e^{-i\,\gamma^{t}{}_{H;l,2}\,\mathcal{H}_{2}}e^{-i\,\gamma^{t}{}_{X;l,1}\,X}e^{-i\,\gamma^{t}{}_{H;l,1}\,\mathcal{H}_{1}}\left|\psi_{0}\right\rangle\quad,$$

when it is executed.

Then the quantum apparatus executes the quantum circuit. The one resulting quantum state $|\psi(\gamma^{t})\rangle$ then encodes a whole population of $N_S$ candidate solutions as superposition,

$$\left|\psi(\gamma^{t})\right\rangle=\sum_{m=1}\xi_{t}(\mathrm{x}_{m})\left|\mathrm{x}_{m}\right\rangle\quad.$$

For this state a full state tomograph is done on the quantum device (see e.g. "Efficient quantum state tomography", Nat Commun 1,149 (2010) doi 10.1038/ncomms1147), which gives the list of all weights contributing to the state, $T=\{|\xi_{t}$

$(x_{c})|^{2}$ for $c$ in 1,... $d_{H}\}$ and the set of $N_s$ solutions $\mathbb{S}_{t}$ at iteration t is extracted from this by selecting the ones which have the largest amplitudes, $\mathbb{S}_{t}=\left\{\mathrm{x}_{m}\right\}_{m=1}^{N_S}$ where $x_{m}$ correspond to the largest $N_S$ entries in the tomography list $T$.

iii) The classical computing component receives the population of solutions $\mathbb{S}_{t}=\left\{x_{m}\right\}_{m=1}^{N_S}$ from the quantum computing component and stores it for further processing in the archive. Then, all objective function values from equations (*OBJ*1) and (*OBJ*2) are computed for each of the solutions in the population, which results in a set of

objective value vectors

$$\mathbb{O}_t = \left\{ \vec{C}(\mathbf{x}_m) \quad \forall\, \mathbf{x}_m \in \mathbb{S}_t \right\}.$$

From this set of objective value vectors, the set of non-dominated solutions $\mathbb{PF}_t = \left\{ \vec{C}(\mathbf{x}_i) \right\}_{i=1}^{N_{PF}}$ are selected. This represents the approximation of the Pareto front $\mathbb{PF}_t$ at iteration $t$ and the corresponding set of solutions is an estimate of the Pareto set $\mathbb{PS}_t = \left\{ \mathbf{x}_i \right\}_{i=1}^{N_{PF}}$. Form this set of nondominated solutions, the hypervolume indicator $HV(\mathbb{PF}_t)$ is calculated, which in turn is used to calculate the fitness value $f_t$ associated with the parameters of the PQC,

$$f_t \equiv f(\gamma^t) = -HV(\mathbb{PF}_t).$$

The fitness value is then fed back into the classical optimization algorithm

$$\mathcal{COA} \leftarrow f(\gamma^t)$$

and the optimizer updates its internal state accordingly.

Additionally, the search parameters $\gamma^t$, the corresponding fitness value $f(\gamma^t)$, the current estimate of the Pareto front $\mathbb{PF}_t$, and the corresponding Pareto set of candidate solutions $\mathbb{PS}_t$, are added to the archive,

$$\mathcal{A} \rightarrow \mathcal{A} + \{ t, \gamma^t, f(\gamma^t), \mathbb{PS}_t, \mathbb{PF}_t \}$$

iv) Thereafter, a convergence criterion is checked on the classical computation apparatus. This can be, for example, whether the maximally allowed number of cost function evaluations has been reached, or if the improvement of the fitness value $f_t$ over the last couple of iterations was not enough.

    a. If the convergence criterion is met the optimization is stopped and as the final result the final Pareto front and corresponding Pareto set are obtained by selecting all the non-dominated solutions from all approximations of the Pareto front of each iteration, ,

$$\mathbb{PF}_{Final} = NonDominatedSolutions\left( \{ \mathbb{PF}_{t'} \}_{t'=1}^{t} \right).$$

    b. If the convergence criterion is not met, the process is repeated from step 1. above.

The final result is the Pareto set of solutions $\mathbb{PS}_{Final} = \left\{ \mathbf{x}_i \right\}_{i=1}^{N_{PF}}$ which approximate the Pareto front $\mathbb{PF}_{Final} = \left\{ \vec{C}(\mathbf{x}_i) \right\}_{i=1}^{N_{PF}}$, which is then output and visualized. The Pareto front and the corresponding Pareto set form the basis for a financial service company to offer their customers various different portfolios as products. Each portfolio represents an optimal tradeoff solution between expected risk and expected return, and being able to offer solutions from all parts of the complete Pareto front as products to their customer give the financial service company a great benefit.

The proposed method and hybrid quantum-classical computer system utilizing the PQC is effective in producing a good approximations to the Pareto front since all possible solutions are typically present in the superposition of the initial state of the quantum apparatus. The phase operators in the PQC do assign different phases to each individual basis state based on the values of the scalarizing functions uses in the phase operators of Eq. *(PQCEX)*. In that way, the classical optimizer can tune the parameters of the PQC to give the largest diversity and include mostly non-dominated solutions in the quantum state, which maximize hypervolume indicator.

**Claims**

1. A computer implemented method for obtaining a set of Pareto-optimal solutions to a given multi-objective optimization problem with M different objectives $\vec{C}(\mathbf{x}) = \{C_\alpha\}_{\alpha=1}^M = (C_1(\mathbf{x}), C_2(\mathbf{x}), \dots, C_M(\mathbf{x}))^T$ where x represents a classical solution of the multi-objective optimization problem, comprising the following method steps:

   a. generating a set of parameters $\gamma_t$ on a classical computation component using the classical optimization algorithm and sending it to a quantum component,
   b. on the quantum component, generating a quantum state $|\psi\gamma_t\rangle = U(\gamma_t)|\psi_0\rangle$ by executing a parameterized quantum circuit PQC with the set of parameters $\gamma_t$, where the one quantum state $|\psi\gamma_t\rangle$ represents a set of $N_S$ different solutions

   c. selecting a set of $N_s \geq N_{PF}$ basis states $\{|\mathbf{x}_i\rangle\}_{i=1}^{N_S}$¹ from the one quantum state $|\psi\gamma_t\rangle$ and sending the information of which basis states were selected to the classical computation component,
   d. on the classical computation component calculating a set of objective values consisting of the objective values for each solution in the set of classical solutions,
   e. generating a new estimate for the Pareto set of solutions and the corresponding Pareto front by the classical optimizer incorporating the set of solutions and the corresponding set of objectives values,
   f. updating the internal state of the classical optimization algorithm based on the current set of solutions and the Pareto set and their corresponding sets of obj ective values,
   g. checking a convergence criterion and if the stopping criterion is not satisfied, repeating the process from step a. onwards, until the sopping criterion is fulfilled,

   taking the results after the latest iteration have been completed as a set of Pareto optimal solutions, for which the corresponding set of objective value vectors is an approximation to the true Pareto front.

2. The method according to claim 1,
   **characterized in that**
   in addition to updating the internal state of the classical optimization algorithm, an archive is updated based on the current set of solutions and the Pareto set and their corresponding sets of objective values, in the step of generating the new estimated further incorporates values from previous iterations retrieved from an archive.

3. The method according to claim 1 or 2,
   **characterized in that**
   the parameterized quantum circuit PQC implements a unitary quantum operation $U(\gamma)$ which is composed of $N_L$ layers with different choosable sets of parameters as

$$U(\gamma) = \prod_{l=1}^{N_L} U_l(\gamma_l)$$

   and where each layer $l$ comprises multiple mixing and phase operators with separately choosable parameter sets $\gamma_l = \{\gamma_{x;l}, \gamma_{p;l}\}$, and the unitaries in each layer have the form

$$U_l(\gamma_l) = \prod_{\alpha=1}^M e^{-i X_\alpha(\gamma_{x;l,\alpha})} e^{-i \gamma_{H;l,\alpha} \mathcal{H}_\alpha}$$

   where the phase unitaries in each layer $\sim e^{-i \gamma_{H;l,\alpha} \mathcal{H}_\alpha}$ have freely choosable parameters $\gamma_{H;l,\alpha} \in \mathbb{R}$ and are generated by cost Hamiltonians $\mathcal{H}_\alpha$ with $\alpha = 1, \dots, M$, where each cost Hamiltonian $\mathcal{H}_\alpha$ represents one classical objective function $C_\alpha$, in the sense that the measurement basis states $|\mathbf{x}\rangle$ are simultaneous eigenstates of all problem Hamiltonians and the eigenvalues of the problem Hamiltonians are given by the value of the corresponding classical objective function of the corresponding classical solutions, x,
and where the mixing unitaries in each layer, $\sim e^{-iX_\alpha(\gamma_{x;l,\alpha})}$, have freely choosable parameters $\gamma_{x;l,\alpha}$ and are generated by $M$ parametrized mixing operators $X_\alpha(\gamma_{x;l,\alpha})$ with $\alpha = 1, \dots, M$, where the mixing operators do not commute with the cost Hamiltonians.

4. The method of claim 1 or 2
**characterized in that**
the parameterized quantum circuit PQC implements a unitary quantum operation $U(\gamma)$ which is composed of $N_L$ layers with different choosable sets of parameters as

$$U(\gamma) = \prod_{l=1}^{N_L} U_l(\gamma_l)$$

and where each layer $l$ comprises multiple mixing and phase operators with separately choosable parameter sets $\gamma_l \in \{\gamma_{x;l}, \gamma_{p;l}\}$, and which has the form

$$U_l(\gamma_l) = \prod_{k=1}^{N_P} e^{-i\,X_k(\gamma_{x;l,k})}\ e^{-i\,\gamma_{P;l,k}\,P_k}$$

where the phase unitaries in each layer $\sim e^{-i\gamma_{p;l,k}\,P_k}$ have freely choosable parameters $\gamma_{P_l,l,k} \in \mathbb{R}$ and are generated by specific sums over the cost Hamiltonians $\mathcal{H}_\alpha$ $P_k = \sum_{\alpha=1}^{M} a_{k,\alpha}\,\mathcal{H}_\alpha$ , where each cost Hamiltonian $\mathcal{H}_\alpha$ represents one classical objective function $C_\alpha$, in the sense that the measurement basis states $|x\rangle$ are simultaneous eigenstates of all cost Hamiltonians and the eigenvalues of the problem Hamiltonians are given the value of the corresponding classical objective function of the corresponding classical solutions, x, where the mixing unitaries in each layer, $e^{-iX_k(\gamma_{x;l,k})}$, have freely choosable parameters $\gamma_{x;l,k}$ and are generated by $M$ parametrized mixing operators $X_k(\gamma_{x;l,k})$ with k= 1,..., $N_P$, where the mixing operators do not commute with the cost Hamiltonians.

5. The method according to claim 4,
**characterized in that**
the coefficients in these sums $a_{k,\alpha} \in \mathbb{R}$ represent reference vectors $\vec{\alpha}_k$ which have to fulfill $\sum_\alpha a_{k,\alpha}^2 = \vec{a}_k^T \cdot \vec{a}_k = 1$ and $\alpha_{k,n} \geq 0$ for each k, and for each k, define a certain direction in the space of objective values and thus reflect one user preference and are determined in the beginning as part of the problem definition,

$$\mathcal{H}_\alpha C_\alpha|x\rangle\ xe^{-i\,X_k(\gamma_{x;l,k})}\gamma_{x;l,k}\ MX_\alpha(\gamma_{x;l,k})= 1, \dots, N_P.$$

6. The method according to claim 1 or 2,
**characterized in that**
the parameterized quantum circuit PQC implements a unitary quantum operation $U(\gamma)$ which is composed of $N_L$ layers with different choosable sets of parameters as

$$U(\gamma) = \prod_{l=1}^{N_L} U_l(\gamma_l)$$

and where each layer $l$ comprises multiple mixing and phase operators with separately choosable parameter sets $\gamma_l \in \{\gamma_{x;l}, \gamma_{v;l}\}$, and which have the form

$$U_l(\gamma_l) = e^{-i\,X_l(\gamma_{X;l})}\,e^{-i\,\gamma_{V;l}\,V}$$

where the phase unitaries in each layer $e^{-i\gamma_{V;l}V}$ have freely choosable parameters $\gamma_{V;l} \in \mathbb{R}$ and are generated by an operator V which estimates the hypervolume in objective space which is spanned by a population of states as it is encoded by a quantum superposition of states where the function $HV(\{\,\vec{C}(\mathbf{x}_i)\,\}_i^{N_S})$ gives the hypervolume, which is spanned by the objective value vectors $\vec{C}(\mathbf{x}_i) = \{\,C_a(\mathbf{x}_i)\,\}_{a=1}^{M}$ of the set of solutions $\{\mathbf{x}_i\}_{i=1}^{N_S}$ and the function $hs\big(\{\xi_i\}_{i=1}^{N_S}\big)$ has function values between zero and one and allows for a downscaling of the hypervolume of a particular set of solutions in case the individual amplitudes of some of the contributing states are smaller than a threshold or an inhomogeneity of a distribution of the amplitudes exceeds a threshold,

and where each cost Hamiltonian $\mathcal{H}_a$ represents one classical objective function $C_\alpha$, in the sense that the measurement basis states $|x\rangle$ are simultaneous eigenstates of all cost Hamiltonians and the eigenvalues of the problem Hamiltonians are given the value of the corresponding classical objective function of the corresponding classical solutions, x,
and where the mixing unitaries in each layer $e^{-iX_l(\gamma_{X;l})}$, have at least one freely choosable parameter $\gamma_{X;l}$ and are generated by the parametrized mixing operators $X_l(\gamma_{X;l})$, where the mixing operators do not commute with the cost Hamiltonians.

7. The method according to any of claims 1 to 6
   **characterized in that**
   the basis-state selection is performed by sampling from the quantum state $|\psi_{\gamma t}\rangle$ which is realized by measuring repeatedly the quantum state, and adding for each measured state $|x_m\rangle$ the corresponding classical solution $x_m$ to the set of selected states, $\mathbb{S}_t$ until $N_S$ different states have been measured and added to the set of selected states,
   $$\mathbb{S}_t = \{\mathbf{x}_i\}_{i=1}^{N_S}.$$

8. The method according to any of claims 1 to 6,
   **characterized in that**
   the basis-state selection is performed by a full state tomography from the quantum state $|\psi_{\gamma t}\rangle$ where the set of weights of each basis state is determined, $T = \{|\xi_i|^2\}_{i=1}^{d_H}$, and the basis states corresponding to the subset of the $N_S$ largest weights is selected, which form the set of selected states, $\mathbb{S}_t = \{\mathbf{x}_i\}_{i=1}^{N_S}.$

9. The method according to any of claims 3 to 8,
   **characterized in that**
   the mixing operator in each layer is given by a sum over all $x$-angular momentum operators or generalized Pauli $X$-operators of each physical qudit and where the coefficient of each individual angular momentum operator in each layer is given by one freely choosable parameter $\gamma_{X;k/\alpha,l,i} \in \mathbb{R}$, where $k/\alpha$ enumerates the mixing operators, $l$ denotes the layers and $i$ enumerates all physical qudits.

10. The method according to any of claims 3 to 9,
    **characterized in that**
    the mixing operator in each layer is given by a sum over all $x$-angular momentum operators or generalized Pauli $X$-operators of each physical qudit and where there is only one global coefficient for the complete sum over all individual angular momentum or generalized Pauli $X$ operators applied to each physical qudit in each layer which is given by the freely choosable parameter $\gamma_{X;k/\alpha,l} \in \mathbb{R}$ where $k/\alpha$ enumerates the mixing operators, and $l$ denotes the layers.

11. The method according to any of claims 4 to 5,
**characterized in that**

the coefficients $a_{k,\alpha}$ of the reference vectors of the phase Hamiltonians, $P_k = \sum_{\alpha=1}^{M} a_{k,\alpha} \mathcal{H}_\alpha$, are determined and adapted in each iteration step t according to the state of the art procedure for reference vector adaptation such that in each iteration a different set of reference vectors is used which allows a speed-up of the optimization process and a diversification of the obtained Pareto solutions.

12. The method according to any of claims 1 to 11
**characterized in that**
the problem is a multi-objective bi-directional electric vehicle charging problem where the target is to find a set of Pareto optimal configurations of discrete integer variables, which encode a full charging and service schedule for a fleet of electric vehicles and where multiple objectives, which are at least two of electricity cost for fulfilling all charging demands, customer satisfaction, maximizing utilization of renewable energies, minimizing electricity drawn from the grid, and minimizing the peak electricity power consumption, are considered for achieving an approximation of the

Pareto front, $\mathbb{PF}$ is obtained.

13. The method according to any of claims 1 to 11,
**characterized in that**
the method is applied to obtain the efficient frontier of possible portfolio compositions as formulated by the Markowitz model of Modern portfolio theory by finding the compositions of a portfolio over time as specified by integer variables which specify the investment amount into asses n at time s and where the efficient frontier is spanned by those portfolio compositions which have optimal tradeoffs between maximizing return and minimizing risk and thus pose a two-objective optimization problem.

14. A hybrid quantum-classical computer system comprising

with a quantum component configured to realize a parametrized quantum circuit PQC by implementing a unitary quantum operation $U(\gamma)$ which is parametrized by freely choosable parameters $\gamma$ and which generates a N-qubit or qudit quantum state $|\psi_\gamma\rangle$ by applying the unitary operator to a previously defined N-qubit or qudit initial state $|\psi_0\rangle$, i.e. $|\psi_\gamma\rangle = U(\gamma)|\psi_0\rangle$, which can be decomposed into the measurement basis of the quantum device,

$|\psi_\gamma\rangle = \sum_{c=1}^{d_H} \xi_{\gamma,c} |x_c\rangle$ with $d_H$ the dimensionality of the Hilbert space, and each measurement basis state $|x_c\rangle$ encodes one classical solution $x_c$,
and a classical computing component which is configured to run a classical optimization algorithm by providing new parameters values $\gamma$ to the quantum computing component, initiating the execution of the PQC and the preparation of the state $|\psi_\gamma\rangle$ and then receiving a set of classical solutions from the quantum module as a result and calculating the all cost functions for each solutions,
where both modules together are used to solve classical multi-objective optimization problem by iteration as defined in the method according to any one of the claims 1 to 14.

Quantum module running
parametrizable quantum circuit

Classical module running classical
optimization algorithm

Initial state $\quad |\psi_0\rangle$

Obtain final state with parametrized
unitary gates

$$|\psi_{\gamma_t}\rangle = U(\gamma_t)\,|\psi_0\rangle$$

Extract population of solutions by
basis state selection method

$$|\psi_{\gamma_t}\rangle \rightarrow \mathbb{S}_t = \{x_m\}_{m=1}^{N_S}$$

$\gamma_t$

Classical optimizer generates new
parameters $\gamma_t$

Increase iteration counter $t \rightarrow t+1$

no

converged?

yes

Select non-dominated solutions and
obtain Pareto front

$$\mathbb{PF}_t = \{\vec{C}(x_m)\}_{m=1}^{N_{PF}}$$

And update the archive

$$\mathcal{A} \rightarrow \mathcal{A} + \{t, \gamma_t, \mathbb{PS}_t, \mathbb{PF}_t\}$$

Calculate classical objectives for
population of solutions $\mathbb{S}_t$

$$\mathbb{O}_t = \{\vec{C}(x_m)\}_{m=1}^{N_S}$$

$\mathbb{S}_t$

Final non-dominated solutions
and Pareto front

$$\mathbb{PS}_t = \{x_m\}_{m=1}^{N_{PF}}$$

$$\mathbb{PF}_t = \{\vec{C}(x_m)\}_{m=1}^{N_{PF}}$$

**Fig. 1**

Europäisches Patentamt

European Patent Office

Office européen des brevets

# EUROPEAN SEARCH REPORT

**Application Number**

**EP 23 18 1719**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | URGELLES HELEN ET AL: "Multi-Objective Routing Optimization for 6G Communication Networks Using a Quantum Approximate Optimization Algorithm", SENSORS, 6 October 2022 (2022-10-06), page 7570, XP093106194, DOI: 10.3390/s22197570 Retrieved from the Internet: URL:https://www.ncbi.nlm.nih.gov/pmc/articles/PMC9570750/pdf/sensors-22-07570.pdf [retrieved on 2023-11-27] * sections 1 and 2 * * algorithm 1 * * figure 3 * | 1,3-14 | INV. G06N10/20 G06N10/60 G06N5/01 G06Q10/04 G06Q40/06 G06Q50/06 |
| X | PABLO D\'IEZ-VALLE ET AL: "Multiobjective variational quantum optimization for constrained problems: an application to Cash Management", ARXIV.ORG, CORNELL UNIVERSITY LIBRARY, 201 OLIN LIBRARY CORNELL UNIVERSITY ITHACA, NY 14853, 8 February 2023 (2023-02-08), XP091432512, * figure 2 * * sections 2-4 * * algorithm 1 * | 1,2,14 | |
| A | Peláez Emilio: "Quantum state tomography", , 14 January 2021 (2021-01-14), pages 1-16, XP093106197, Retrieved from the Internet: URL:https://medium.com/quantum-untangled/quantum-state-tomography-4163d1df5a4d [retrieved on 2023-11-28] * page 1 - page 8 * | 7,8 | TECHNICAL FIELDS SEARCHED (IPC) G06N G06Q |

The present search report has been drawn up for all claims

| Place of search | Date of completion of the search | Examiner |
|---|---|---|
| The Hague | 28 November 2023 | Theissing, Simon |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Noisy intermediate-scale quantum (NISQ) algorithms. *Rev. Mod. Phys.*, vol. 94, 015004
- The variational quantum eigensolver: a review of methods and best practices. *Physics Reports*, vol. 986, 1-128
- A Quantum Approximate Optimization Algorithm. *arXiv: 1411.4028*, 2014
- From the quantum approximate optimization algorithm to a quantum alternating operator ansatz. *Algorithms*, 2019, vol. 12
- Quantum machine learning beyond kernel methods. *arXiv preprint arXiv:2110.13162*, 2021
- Multiobjective variational quantum optimization for constrained problems: an application to Cash Management. *arXiV:2302.04196*, https://doi.org/10.48550/arXiv.2302.04196
- Multi-Objective Routing Optimization for 6G Communication Networks Using a Quantum Approximate Optimization Algorithm. *Sensors*, 2022, vol. 22 (19), 7570
- Quantum-Assisted Routing Optimization for Self-Organizing Networks. *IEEE Access*, 2014, vol. 2, 614-632
- Non-Dominated Quantum Iterative Routing Optimization for Wireless Multihop Networks. *IEEE Access*, 2015, vol. 3, 1704-1728
- Quantum-Assisted Joint Multi-Objective Routing and Load Balancing for Socially-Aware Networks. *IEEE Access*, 2016, vol. 4, 9993-10028
- A Reference Vector Guided Evolutionary Algorithm for Many-Objective Optimization. *IEEE Transactions on Evolutionary Computation*, 2016, vol. 20 (5), 773-791
- Adaptation of Reference Vectors for Evolutionary Many-objective Optimization of Problems with Irregular Pareto Fronts. *IEEE Congress on Evolutionary Computation (CEC)*, 2019, 1726-1733
- **Y. WANG** ; **Z. HU** ; **B. C. SANDERS** ; **S. KAIS**. Qudits and High-Dimensional Quantum Computing. *Frontiers in Physics*, 2020, vol. 8
- Efficient quantum state tomography. *Nat Commun*, 2010, vol. 1, 149
- Predicting many properties of a quantum system from very few measurements. *Nat. Phys.*, 2020, vol. 16, 1050-1057
- Quantum Computation and Quantum Information. Cambridge University Press, 2010
- Encoding-Independent Optimization Problem Formulation for Quantum Computing. *arXiv:2302.03711*, 2023
- A Reference Vector Guided Evolutionary Algorithm for Many-Obj ective Optimization. *IEEE Transactions on Evolutionary Computation*, 2016, vol. 20 (5), 773-791
- Predicting many properties of a quantum system from very few measurements. *Nat. Phys.*, 2020, vol. 16, 1050-1057, https://doi.org/10.1038/s41567-020-0932-7
- Performance Analysis on Knee Point Selection Methods for Multi-Objective Sparse Optimization Problems. *IEEE Congress on Evolutionary Computation*, 2018, 1-8
- A Multi-objective Evolutionary Algorithm for ''Finding Knee Regions Using Two Localized Dominance Relationships. *IEEE Transactions on Evolutionary Computation*, 2021, vol. 25 (1), 145-158
- Computational aspects of alternative portfolio selection models in the presence of discrete asset choice constraints. *Quantitative finance*, 2001, vol. 1 (5), 489-501
- Solving the Optimal Trading Trajectory Problem Using a Quantum Annealer. *IEEE Journal of Selected Topics in Signal Processing*, 2016, vol. 10 (6), 1053-1060
- Dynamic portfolio optimization with real datasets using quantum processors and quantum-inspired tensor networks. *Phys. Rev. Research*, 2022, vol. 4, 013006